Europäisches Patentamt

European Patent Office

Office européen des brevets

(11) Publication number: **0 090 102**
**B1**

(12) **EUROPEAN PATENT SPECIFICATION**

(45) Date of publication of patent specification: **09.12.87**

(51) Int. Cl.⁴: **B 23 D 55/10**

(21) Application number: **82301586.2**

(22) Date of filing: **25.03.82**

(54) Tension adjustment for a band saw.

(43) Date of publication of application:
**05.10.83 Bulletin 83/40**

(45) Publication of the grant of the patent:
**09.12.87 Bulletin 87/50**

(84) Designated Contracting States:
**DE FR GB**

(56) References cited:
**CH-A- 163 071**
**FR-A-2 439 070**
**GB-A- 659 930**
**US-A-1 643 829**
**US-A-2 492 824**
**US-A-2 617 451**

(73) Proprietor: **HOBART CORPORATION (a
Corporation of Delaware)
World Headquarters
Troy, Ohio 45374 (US)**

(72) Inventor: **Athey, Stuart E.
HOBART CORPORATION
Troy Ohio 45374 (US)**
Inventor: **Johnson, Thomas M.
HOBART CORPORATION
Troy Ohio 45374 (US)**
Inventor: **Shaeffer, Raymond P.
HOBART CORPORATION
Troy Ohio 45374 (US)**

(74) Representative: **Warren, Anthony Robert et al
BARON & WARREN 18 South End Kensington
London W8 5BU (GB)**

## Description

The present invention relates to band saws and more particularly to means for adjusting the tension in an endless band saw blade.

It is well known that some means must be provided in a band saw to relax the tension on its blade in order to permit blade changing, to accommodate blades of slightly varying length, and to tension the blade to produce enough tractive force transmission capability through frictional contact with the lower band drive wheel to deliver the necessary cutting force from wheel to blade. Most prior art band saws provide for such an adjustment by producing rectilinear motion of either the upper band wheel, as is disclosed for example in US—A—2,585,957 which is assigned to the assignee of the present invention, or by adjustment of the lower band wheel such as, for example, as illustrated in US—A—2,617,451, which describes the nearest prior art.

Such devices employ a slide way in which the mount for the movable band wheel is supported for the rectilinear motion toward and away from the other band wheel in order to maintain the cutting flight of the blade at a predetermined angle with respect to the meat cutting table. These slide ways, however, are prone to contamination from cuttings from the band saw which causes difficulty in moving the slide supporting the band wheel, along the slide way, and in addition, are generally difficult to clean because of the contour involved.

Another type of tension adjustment device for a band saw is shown in FR—A—2,439,070. That specification shows a band saw in which a lower pulley is mounted on an output shaft of a drive motor, the latter being attached to a first plate. The shaft passes through an opening in the plate which is eccentric relative to a raised, annular shoulder on the plate. The raised shoulder extends through an opening in and rotatably engages, a second element which is mounted on the saw frame.

Adjustment of tension is effected by rotation of the first element relative to the second element, since the axis of the annular shoulder is offset from the axis of the motor shaft and pulley. A locking screw extends through the two elements and can be tightened to prevent rotation once an adjustment has been made.

A disadvantage of such devices is that, to make an adjustment, the motor must be grasped and rotated by hand. This procedure is difficult and often messy, as the motor may be covered with debris from the saw blade.

The present invention overcomes the above described difficulties and disadvantages associated with prior art band saws, and particularly those designed for meat cutting in which removal of contamination is a particularly important consideration, by providing a pivotal support for a protective housing which also carries the lower band wheel, the associated motor and gear transmission components, such protective housing being easily cleaned and preventing contamination of the components therein.

The present invention is utilised in a band saw of the type which generally includes a frame supporting a cutting table, upper and lower band wheels mounted in a common plane but on opposite sides of the cutting table for rotation about respective substantially parallel central axes, and supporting an endless band saw blade which encircles the wheels in driven engagement therewith. One flight of the band saw blade is exposed at the cutting table for cutting objects, such as meat or the like, placed on the table. Drive means rotates the lower band wheel to cause movement of the band saw blade for cutting purposes.

The present invention provides a band saw including vertically spaced upper and lower band wheels mounted in a frame, an endless band saw blade fitted around said wheels, a drive shaft coupled to said lower band wheel and having a common axis of rotation therewith, support means including a motor flange, drive motor means mounted on said motor flange for rotating said drive shaft, a pivot support on said frame for supporting said drive shaft and said motor flange and having a pivot axis extending in spaced relation to said axis of rotation of said drive shaft, and adjustment means for controlling motion of said drive means and lower wheel about said pivot support, characterised in that said support means includes a gear box having an output coupled to and supporting said drive shaft which is parallel to the pivot axis and an input including said motor flange; and said motor is mounted on said motor flange on an opposite side of said gear box from said pivot support such that the weight of said motor facilitates tensioning of said blade, and increases stability of said support means when said saw blade is tensioned.

The invention further provides a band saw including a frame, upper and lower band wheels mounted on said frame, an endless band saw blade fitted around said wheels, a drive shaft coupled to said lower band wheel and having a common axis of rotation therewith, support means adjustably mounted on said frame and including a motor flange, drive means mounted on said motor flange, and adjustment means and pivot connection means for positioning said support means, characterised in that the pivot connection means are attached to said frame and to an end of said support means such that said support means pivots relative to said frame about a pivot axis in spaced parallel relation to a rotational axis of said drive shaft; and said adjustment means includes first pivot means attached to said frame at a location thereon spaced from said pivot connection means, second pivot means attached to said support means at a location thereon spaced from said pivot connection means, and bolt means extending between and threadedly engaging at least one of said first and second pivot means, whereby rotation of said bolt means causes said support means to pivot about said pivot axis of said pivot connection means to vary a distance of said lower wheel from said upper wheel.

In order that the invention may be more readily understood, reference will now be made to the accompanying drawings, in which:

Fig. 1 is a side elevational view of a band saw including the improvement of the present invention;

Fig. 2 is a front elevational view of the band saw of Fig. 1;

Fig. 3 is an enlarged view of the lower portion of the band saw of Fig. 1;

Fig. 4 is a more greatly enlarged view of the tensioning and adjustment mechanism shown in Fig. 3, with parts broken away to show details of the drive; and

Fig. 5 is an enlarged top view of the tensioning and adjustment mechanism, taken generally on line 5—5 in Fig. 4, and with the scrap cover removed.

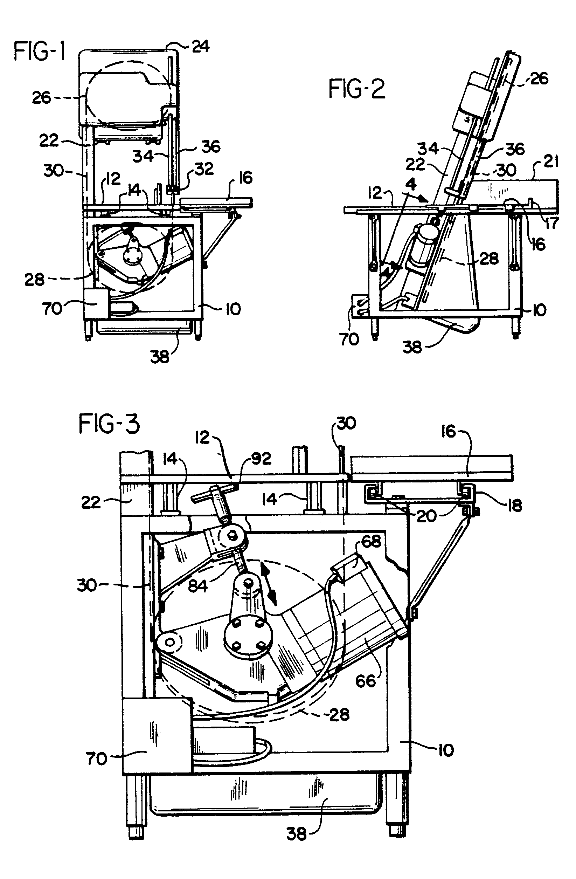

The drive and tensioning means of the present invention is intended for utilization in a band saw and particularly in a meat cutting band saw of the type illustrated in Figs. 1 and 2. Such a band saw generally comprises a base frame 10 which supports a stationary table 12 on brackets 14, and a carriage 16 with a backing plate 17 is mounted on a runway 18 which captures a plurality of rollers 20 to which the carriage 16 is secured. The tops of the table and carriage are in the same plane, and a gage plate 21 is movably supported extending upward from table 12 to permit adjustment of the thickness of material to be cut. This construction permits the carriage 16 to be reciprocated laterally adjacent the stationary table 12 in order to feed the material through the saw and cut it to the desired width.

At the rear center portion of the base frame 10 is erected a support column 22 which forms part of the frame structure of the band saw and to which is secured an upper housing 24. Within housing 24 an upper band wheel 26 is journalled for rotation about its central axis in housing 24.

Support column 22 preferably is secured to base frame 10 so as to be at an acute angle to the infeed direction of the material to be cut, as illustrated in Fig. 2, although the positioning of the support column may be vertical as is more conventional. Support column 22 extends into the lower portion of base frame 10 and supports the lower band wheel 28 through the tensioning and adjustment mechanism of the present invention, as described in more detail below. Encircling the upper and lower band wheels 26 and 28 is a band saw blade 30 which has one straight cutting flight extending through the stationary table 12 for cutting the material, and a return flight which extends along support column 22.

An upper blade guide 32 is adjustably secured to a rod 34 supported by upper housing 24, to permit the blade guide 32 to be positioned toward and away from the cutting table to locate the blade guide 32 immediately above the upper surface of the material, while different thicknesses of material are cut. An upper blade guard 36, which has its lower end portion secured to blade guide 32, extends over the portion of the saw blade 30 between upper housing 24 and blade guide 32 to shield the blade along that portion of the flight above the blade guide. A lower blade guide (not shown) is also provided, being mounted to the base frame 10 of the band saw at a position aligned with the cutting flight of the band saw blade 30 and located below the table 12 and above the lower band wheel 28.

A scrap catcher 38 is provided beneath table 12 and is suitably hinged at its lower end to move outward and downward from the closed position, as seen in Fig. 2. The catcher 38 encloses the lower band wheel 28, but can be opened for access to the lower band wheel 28, for cleaning, and for removing scraps from the catcher 38.

Referring to the support and adjustable tensioning means of the present invention, as best illustrated in Figs. 3, 4 and 5, a bracket 40 is secured by bolts 42 to the lower portion of support column 22, and has a cylindrical extension 44 formed in the lower portion thereof and a Y-shaped arm or yoke 46 formed at the upper portion thereof. Extension 44 has a cylindrical opening defined therein, which has its central axis parallel to the axis of rotation of lower band wheel 28. A pivot locating pin 48 is fixed in the opening, with the ends of the pin protruding. A support housing 50 is held by the ends of locating pin 48 which extend through arm extensions 52 and 54 formed on support housing 50, so that housing 50 is pivotally mounted to bracket 40.

A gear box 56 is incorporated within support housing 50, in the region where the drive shaft 58 supporting lower band wheel 28 is journalled. Drive shaft 58 extends through housing 50, and is journalled on each side of the housing. A worm wheel 60 is keyed to the shaft, and is engaged by a worm gear 62, which is in turn keyed to an output shaft 64 of drive motor 66. The drive motor is mounted to a flange formed on the support housing 50 at one side of gear box 56. The motor is preferably mounted with output shaft 64 in a plane perpendicular to drive shaft 58 and on the opposite side thereof from pivot locating pin 48 in order to add the maximum amount of leverage from the weight of the motor to application of tension to the saw blade 30.

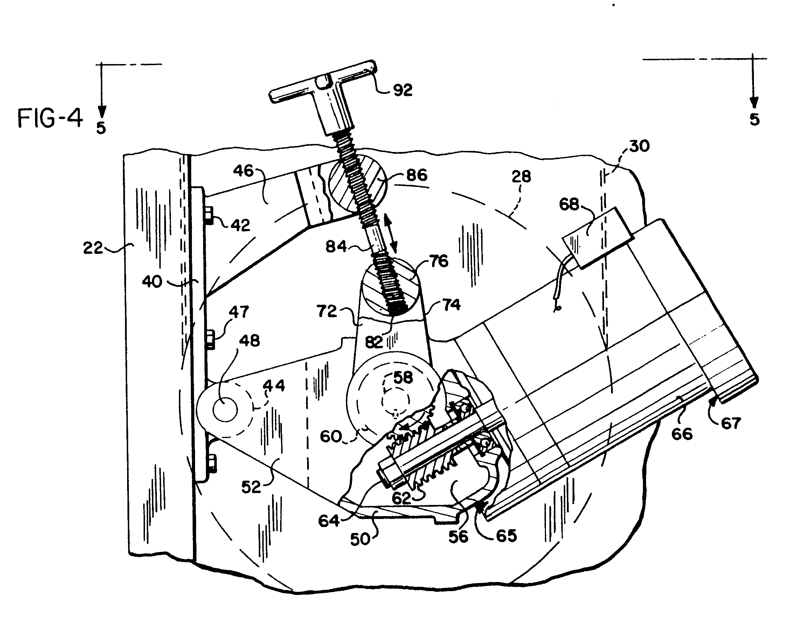

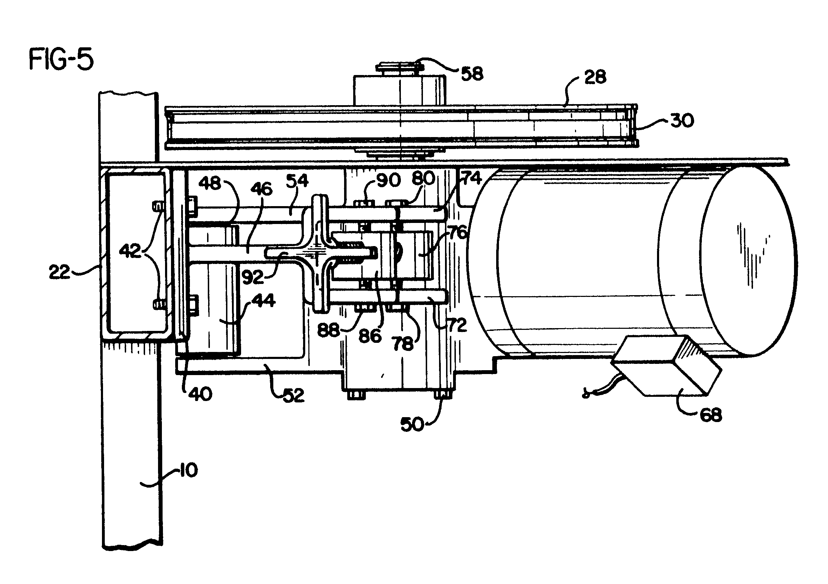

As can be seen in Figs. 4 and 5, support housing 50, gear box 56 and motor 66 all have exterior surfaces which merge to prevent scrap material from entering any of these components and thus prevent contamination thereof in areas which would otherwise be difficult to clean. The entire drive assembly is totally enclosed except for air passages 65 and 67 for cooling the motor, and its outer surfaces are easily cleaned. Electrical inputs to the motor are contained within the box 68 and, as shown in Figs. 1 and 2, extend from an electrical connector box 70 which is in turn connected to a power supply source.

Referring again to Figs. 4 and 5, a further pair of extensions 72 and 74 are formed in the upper portion of housing 50. Between them is a cylindrical member 76 supported by screws 78 and 80 which are free to rotate in extensions 72 and 74, and are threaded into member 76 along its central axis, to permit pivotal movement of the member 76 about its central axis.

Member 76 is provided with a diametrically extending threaded opening 82 perpendicular to its rotational axis. A threaded rod 84 is engaged within opening 82, and has its opposite end, which is oppositely threaded as shown in Fig. 4, received in a cylindrical member 86 which is identical to cylindrical member 76, except for the direction of threading. Cylindrical member 86 is in turn supported in the opening of Y-shaped arm 46, as shown in Fig. 5, by bolts 88 and 90 which are free to rotate within the arm 46 and are threaded into member 86 along its axis of rotation to permit pivotal movement thereof.

Secured to the upper end portion of rod 84 is handle 92 which permits the operator of the saw to adjust tension in the blade 30 upon rotation of the handle 92.

It is to be noted that in locating pin 48 relative to the axis of rotation of lower band wheel 28, it is desirable that the cutting flight of the blade 30 will be in a plane substantially perpendicular to the plane in which both the locating pin 48 and the drive shaft 58 lie when the nominal length of blade is utilized. Only slight pivotal movement of the support housing 50, and thus the lower band wheel 28, will be produced by adjustment in the tensioning device, and this slight pivotal movement of the center of wheel 28 in either direction will not cause any appreciable misalignment of the cutting flight of the band saw blade 30 with respect to the upper or lower blade guides.

In operation, in order to adjust the tension on the saw blade 30 of the present invention, the operator need merely rotate the handle 92. This will cause the threaded engagement between the rod 84 and cylindrical members 76 and 86 to produce an expansion or contraction of the distance between these two members, and resulting pivotal rotation of the housing 50 about the axis of pin 48 will raise or lower the lower band wheel to increase or decrease the tension on the blade 30, as desired. This adjustment has no effect on the direct drive coupling of the motor to wheel 28.

Since the motor 66 is secured to the support housing 50 on the opposite side of the axis of rotation of band wheel 28 from the pin 48, and the motor shaft is perpendicular to shaft 58, the weight of the motor will assist to the maximum extent in increasing the tension on the band saw blade due to the leverage resulting from its location at a maximum distance from the pin 48. Thus, less torque need be applied by the operator to handle 92 in order to increase the tension on the blade 30.

While the form of apparatus herein described constitutes a preferred embodiment of this invention, it is to be understood that the invention is not limited thereto, and that changes may be made therein without departing from the scope of the invention as defined in the appended claims.

**Claims**

1. A band saw including vertically spaced upper and lower band wheels (26, 28) mounted in a frame (22), an endless band saw blade (30) fitted around said wheels, a drive shaft (58) coupled to said lower band wheel and having a common axis of rotation therewith, support means (50) including a motor flange, drive motor means (66) mounted on said motor flange for rotating said drive shaft, a pivot support (44) on said frame for supporting said drive shaft and said motor flange and having a pivot axis extending in spaced relation to said axis of rotation of said drive shaft (58), and adjustment means (76, 84, 86) for controlling motion of said drive means and lower wheel about said pivot support, characterised in that said support means (50) includes a gear box (56) having an output coupled to and supporting said drive shaft (58) which is parallel to the pivot axis and an input including said motor flange; and said motor is mounted on said motor flange on an opposite side of said gear box from said pivot support such that the weight of said motor facilitates tensioning of said blade, and increases stability of said support means when said saw blade is tensioned.

2. A band saw as claimed in claim 1, characterised in that said drive motor means includes a motor (66) having a shaft (64) drivingly coupled to said drive shaft (58) supporting said lower band wheel (28).

3. A band saw as claimed in claim 1, characterised in that said pivot support (44) includes a pin (48) supported in said frame and providing said pivot axis.

4. A band saw as claimed in any of claims 1 to 3, characterised in that said adjustment means includes an at least partially threaded rod (84); means (76) pivotally connecting an end portion of said rod to said support means (50); means (86) pivotally connecting another portion of said rod to said frame; said rod (84) being rotatably supported in both said connecting means, at least one of said connecting means having a threaded connection to said rod such that rotation of said rod will cause pivotal movement of said support means to adjust tension in said blade.

5. A band saw as claimed in claim 4, characterised in that said rod (84) has oppositely threaded portions and said connecting means are each correspondingly threaded and engaged with said threaded portions of said rod.

6. A band saw as claimed in claim 5, characterised in that said support means (50) and drive means (58, 60, 62) present smooth and essentially continuous exterior surfaces for ease in cleaning therefrom contamination due to waste material from operation of the saw.

7. A band saw including a frame (22), upper and lower band wheels (26, 28) mounted on said frame, an endless band saw blade (30) fitted around said wheels, a drive shaft (58) coupled to said lower band wheel and having a common axis of rotation therewith, support means (50) adjustably mounted on said frame and including a motor flange, drive means (66) mounted on said motor flange, and adjustment means (76, 84, 86) and pivot connection means (44, 48) for positioning said support means, characterised in that the pivot connection means (44, 48) are attached to said frame and to an end of said support means such that said support means pivots relative to said frame about a pivot axis in spaced parallel relation to a rotational axis of said drive shaft; and said adjustment means includes first pivot means (86) attached to said frame at a location thereon spaced from said pivot connection means, second pivot means (76) attached to said support means at a location thereon spaced from said pivot connection means, and bolt means (84) extending between and threadedly engaging at least one of said first and second pivot means, whereby rotation of said bolt means causes said support means to pivot about said pivot axis of said pivot connection means to vary a distance of said lower wheel from said upper wheel.

**Patentansprüche**

1. Bandsäge mit vertikal im Abstand voneinander befindlichen oberen und unteren Bandrädern (26, 28), welche in einem Rahmen (22) montiert sind, einem endlosen Bandsägeblatt (30), welches um diese Räder herumgelegt ist, einer Antriebswelle (58), welche mit dem unteren Bandrad gekoppelt ist und mit diesem eine gemeinsame Rotationsachse aufweist, einem Stützmittel (50) einschließlich eines Motorflansches, einem Antriebsmotormittel (66), welches auf dem Motorflansch zum Drehen der Antriebswelle montiert ist, einer Schwenkabstützung (44) auf dem Rahmen zum Abstützen der Antriebswelle und des Motorflansches und mit einer Schwenkachse, welche sich im Abstand bezüglich der Drehachse der Antriebswelle (58) erstreckt, und Einstellmitteln (76, 84, 86) zum Steuern der Bewegung des Antriebsmittels und des unteren Rades um die Schwenkabstützung, dadurch gekennzeichnet, daß das Stützmittel (50) ein Getriebe (56) aufweist, welches einen Ausgang, der mit der Antriebswelle (58), die parallel zu der Schwenkachse ist, gekoppelt ist und diese abstützt, sowie einen Eingang hat, der den Motorflansch einschließt; und daß der Motor an dem Motorflansch bezüglich der Schwenkabstützung auf der gegenüberliegenden Seite des Getriebes montiert ist, so daß das Gewicht des Motors das Spannen des Blattes erleichtert und die Stabilität des Stützmittels erhöht, wenn das Sägeblatt gespannt wird.

2. Bandsäge nach Anspruch 1, dadurch gekennzeichnet, daß das Antriebsmotormittel einen Motor (66) einschließt, welcher eine Welle (64) hat, die angetrieben mit der Antriebswelle (58) gekoppelt ist, welche das untere Bandrad (28) trägt.

3. Bandsäge nach Anspruch 1, dadurch gekennzeichnet, daß die Schwenkabstützung (44) einen Stift (48) enthält, welcher in dem Rahmen abgestützt ist und die Schwenk- bzw. Drehachse bildet.

4. Bandsäge nach einem der Ansprüche 1 bis 3, dadurch gekennzeichnet, daß das Einstellmittel eine zumindest teilweise mit einem Gewinde versehene Stange (84) enthält; ein Mittel (76), welches schwenkbar ein Endteil der Stange mit dem Stützmittel (50) verbindet; ein Mittel (86), welches schwenkbar einen anderen Teil der Stange mit dem Rahmen verbindet; wobei die Stange (84) drehbar in beiden Verbindungsmitteln gelagert ist, und wobei zumindest eines der Verbindungsmittel eine Gewindeverbindung zu der Stange hat, derart, daß die Drehbewegung der Stange eine Schwenk- bzw. Drehbewegung des Stützmittels bewirkt, um die Spannung in dem Blatt einzustellen.

5. Bandsäge nach Anspruch 4, dadurch gekennzeichnet, daß die Stange (84) einen Teil mit entgegengesetztem Gewinde hat, und daß die Verbindungsmittel jeweils ein entsprechendes Gewinde haben und mit den Gewindeteilen der Stange in Eingriff stehen.

6. Bandsäge nach Anspruch 5, dadurch gekennzeichnet, daß das Stützmittel (50) und die Antriebsmittel (58, 60, 62) glatte und im wesentlichen kontinuierliche äußere Oberflächen aufweisen, um das Reinigen dieser Oberflächen von Verunreinigungen mit Abfallmaterial vom Betrieb der Säge zu erleichtern.

7. Bandsäge mit einem Rahmen (22), oberen und unteren Bandrädern (26, 28), welche an dem Rahmen montiert sind, einem endlosen Bandsägeblatt (30), welches um die Räder herumgelegt ist, einer Antriebswelle (58), welche mit dem unteren Bandrad gekoppelt ist und mit diesem eine gemeinsame Rotationsachse hat, einem Stützmittel (50), welches einstellbar an dem Rahmen montiert ist und einen Motorflansch aufweist, einem Antriebsmittel (66), welches an dem Motorflansch montiert ist, und Einstellmitteln (76, 84, 86) und Schwenkverbindungsmitteln (44, 48) zum Positionieren des Stützmittels, dadurch gekennzeichnet, daß die Schwenkverbindungsmittel (44, 48) an dem Rahmen und an einem Ende des Stützmittels angebracht sind, derart, daß das Stützmittel relativ zum Rahmen um eine Drehachse schwenkt, welche im Abstand parallel zu einer (der) Rotationsachse der Antriebswelle ist; und daß die Einstellmittel ein erstes Schwenkmittel (86) enthalten, welches an dem Rahmen an einer Stelle angebracht ist, welche im Abstand von dem Schwenkverbindungsmittel liegt, daß ein zweites Schwenkmittel (76) an dem Stützmittel an einer Stelle angebracht ist, welche im Abstand von dem Schwenkverbindungsmittel liegt, und daß ein Bolzenmittel (84) sich zwischen dem ersten und zweiten Schwenkmittel erstreckt und zumindest mit einem davon in Gewindeeingriff steht, so daß durch die Drehung des Bolzenmittels bewirkt wird, daß das Stützmittel um die Schwenkachse des Schwenkverbindungsmittels schwenkt, um den Abstand des unteren Rades von dem oberen Rad zu verändern.

## Revendications

1. Scie à ruban comprenant des roues de ruban supérieure et inférieure espacées verticalement (26, 28) montées dans un bâti (22), une lame de scie à ruban (30) adaptée autour desdites roues, un arbre d'entraînement (58) couplé à ladite roue de ruban inférieure et ayant un axe commun de rotation avec elle, un moyen de support (50) comprenant un flasque de moteur, un moyen de moteur d'entraînement (66) monté sur ledit flasque de moteur pour faire tourner ledit arbre d'entraînement, un support de pivot (44) sur ledit bâti pour supporter ledit arbre d'entraînement et ledit flasque de moteur et ayant un axe de pivot s'étendant en relation d'espacement vers ledit axe de rotation dudit arbre d'entraînement (58), et des moyens d'ajustement (76, 84, 86) pour contrôler le mouvement desdits moyens d'entraînement et de ladite roue inférieure autour dudit support de pivot, caractérisée en ce que ledit moyen de support (50) comprend une boîte à engrenages ayant une sortie couplée à — et supportant — ledit arbre d'entraînement (58) qui est parallèle à l'axe de pivot, et une entrée comprenant ledit flasque de moteur, et en ce que ledit moteur est monté sur ledit flasque de moteur sur un côté opposé de ladite boîte à engrenages depuis ledit support de pivot, de façon telle que le poids dudit moteur facilite le tensionnage de ladite lame, et augmente la stabilité dudit moyen de support lorsque ladite lame de scie est mise en tension.

2. Scie à ruban selon la revendication 1, caractérisée en ce que ledit moyen de moteur d'entraînement comprend un moteur (66) ayant un arbre (64) couplé pour l'entraînement audit arbre d'entraînement (58) supportant ladite roue de ruban inférieure (28).

3. Scie à ruban selon la revendication 1, caractérisée en ce que ledit support de pivot (44) comprend un tourillon (48) supporté dans ledit bâti et fournissant ledit axe de pivot.

4. Scie à ruban selon l'une quelconque des revendications 1 à 3, caractérisée en ce que ledit moyen d'ajustement comprend une tige au moins partiellement filetée (84); un moyen de connexion (76) connectant de façon à pouvoir pivoter une portion d'extrémité de ladite tige audit moyen de support (50); un moyen de connexion (86) connectant de façon à pouvoir pivoter une autre partie de ladite tige audit bâti; ladite tige (84) étant supportée de façon à pouvoir tourner dans chacun desdits moyens de connexion, l'un au moins desdits moyens de connexion ayant une connexion filetée à ladite tige de façon à ce que la rotation de ladite tige provoque un mouvement de pivotement dudit moyen de support pour ajuster la tension de ladite lame.

5. Scie à ruban selon la revendication 4, caractérisée en ce que ladite tige a une partie filetée de façon inverse et en ce que lesdits moyens de connexion sont chacun filetés de façon correspondante et engagés avec lesdites parties filetées de ladite tige.

6. Scie à ruban selon la revendication 5, caractérisée en ce que ledit moyen de support (50) et ledit moyen d'entraînement (58, 60, 62) présentent des surfaces extérieures douces et sensiblement continues pour faciliter leur nettoyage de la contamination due à des chutes de matériaux provenant d'un fonctionnement de la scie.

7. Scie à ruban comprenant un bâti (22), des roues de ruban supérieures et inférieures (26, 28) montées sur ledit bâti, une lame de scie à ruban (30) adaptée autour desdites roues, un arbre d'entraînement (58) couplé à ladite roue de ruban inférieure et ayant un axe commun de rotation avec elle, un moyen de support (50) monté de façon ajustée sur ledit bâti et comprenant un flasque de moteur, un moyen d'entraînement (66) monté sur ledit flasque de moteur, un moyen d'ajustement (76, 84, 86) et des moyens de connexion de pivot (44, 48) pour positionner ledit moyen de support, caractérisée en ce que les moyens de connexion de pivot (44, 48) sont fixés audit bâti et à une extrémité dudit moyen de support de façon telle que ledit moyen de support pivote par rapport audit bâti, autour d'un axe de pivot en relation d'espacement parallèle à un axe de rotation dudit arbre d'entraînement; et en ce que ledit moyen d'ajustement comprend un premier moyen de pivot (86) fixé audit bâti à un endroit sur lui espacé desdits moyens de connexion de pivot, un deuxième moyen de pivot (76) fixé audit moyen de support en un endroit sur lui espacé dudit moyen de connexion de pivot, et un moyen de boulon (84) s'étendant entre et engageant par filetage au moins un desdits premier et deuxième moyens de pivot, de sorte que la rotation dudit moyen de boulon amène ledit moyen de support à pivoter autour dudit axe de pivot dudit moyen de connexion de pivot pour modifier la distance de ladite roue inférieure à ladite roue supérieure.

0 090 102

FIG-1

FIG-2

FIG-3

FIG-4

0 090 102

FIG-5